Europäisches Patentamt

European Patent Office

Office européen des brevets

(19)

(11) Veröffentlichungsnummer: **0 026 448**

**B1**

(12) **EUROPÄISCHE PATENTSCHRIFT**

(45) Veröffentlichungstag der Patentschrift: **28.05.86**

(21) Anmeldenummer: **80105741.5**

(22) Anmeldetag: **24.09.80**

(51) Int. Cl.⁴: **C 08 G 18/80, C 08 G 18/79, C 09 D 3/72**

(54) Einkomponenten-Einbrennlacke.

(30) Priorität: **26.09.79 DE 2938855**

(43) Veröffentlichungstag der Anmeldung:
**08.04.81 Patentblatt 81/14**

(45) Bekanntmachung des Hinweises auf die
Patenterteilung:
**28.05.86 Patentblatt 86/22**

(84) Benannte Vertragsstaaten:
**BE CH DE FR GB IT LI LU NL SE**

(56) Entgegenhaltungen:
**EP-A-0 000 798**
**EP-A-0 003 765**
**FR-A-2 243 983**
**FR-A-2 381 810**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Wolf, Elmar, Dr.**
**Am Böckenbusch 3a**
**D-4690 Herne 2 (DE)**
Erfinder: **Gras, Rainer, Dr.**
**An der Ziegelei 91**
**D-4690 Herne 2 (DE)**

(74) Vertreter: **Steil, Hanna, Dipl.-Chem.**
**RSP PATENTE - PB 15 Postfach 1320**
**D-4370 Marl 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 026 448 B1

# 0 026 448

**Beschreibung**

Zur Herstellung von bei gewöhnlicher Temperatur haltbaren Mischungen aus Polyisocyanaten und Polyoxyverbindungen verwendet man bekanntlich Polyisocyanate, bei denen die reaktionsfähigen Gruppen durch Umsetzung mit monofunktionellen Verbindungen verschlossen sind. Derartige Produkte werden üblicherweise als verkappte (oder blockierte) Polyisocyanate bezeichnet, sie werden beispielsweise in den Annalen Bd. 562, 1949, S.205—229 beschrieben.

Beim Einwirken höherer Temperaturen spalten diese Produkte wieder in ihre Ausgangsstoffe zurück, wobei die nun freiwerdenden Isocyanatgruppen ihrerseits mit denen in der Reaktionsmischung vorliegenden Polyoxyverbindungen reagieren können.

Ein Beispiel für ein solches bei Raumtemperatur lagerstabiles Einkomponenten-Einbrennlacksystem ist in der DE—OS 23 46 818 beschrieben. Es besteht aus einem in einem hochsiedenden Lacklösungsmittel gelösten mit ε-Caprolactam blockierten Addukt aus 3 - Isocyanatomethyl - 3.5.5 - trimethylcyclohexylisocyanat (Isophorondiisocyanat=IPDI) und einem hydroxylgruppenhaltigen Polyester auf der Basis von überwiegend aromatischen Dicarbonsäuren und einem Gemisch aus zwei und dreiwertigen Alkoholen. Dieses Lacksystem wird bei 180—350°C ausgehärtet. Die Härtung dieses Systems läuft aber für bestimmte Anwendungen zu langsam ab. Es gelingt zwar, durch Katalysatoren -wie z.B. tertiäre Amine oder organische Zinnverbindungen- die Härtungsgeschwindigkeiten wesentlich zu steigern. Doch kommt es dabei häufig, besonders bei Anwesenheit von Verbindungen, die mit Isocyanaten zu reagieren vermögen, zu unerwünschten Nebenreaktionen. Beispielsweise werden durch sie aus verkappten Polyisocyanaten bereits bei gewöhnlicher Temperatur monofunktionelle Verbindungen abgespalten, so daß die Mischung instabil wird.

Es wurde nun überraschenderweise gefunden, daß die Härtungsdauer verkürzt und die Härtungstemperatur erniedrigt werden können, wenn man Härter verwendet, die aus mit ε-Caprolactam verkapptem Isophorondiisocyanat und/oder aus mit ε-Caprolactam verkapptem isocyanuratgruppenhaltigen Isophorondiisocyanat bestehen.

Dabei stellte sich heraus, daß die Aushärtung um so schneller und bei um so tieferen Temperaturen erfolgen kann, je höher der Isocyanuratanteil bei einem solchen Gemisch ist.

Gegenstand der vorliegenden Erfindung sind somit Einkomponenten-Einbrennlacke auf der Basis von Polyoxyverbindungen und mit ε-Caprolactam ganz oder teilweise verkappten cycloaliphatischen Polyisocyanaten in inerten Lösungsmitteln, die dadurch gekennzeichnet sind, daß sie aus mit ε-Caprolactam verkapptem, teilweise isocyanuratgruppenhaltigem Isophorondiisocyanat mit einem Isocyanuratgehalt von 50—68% und hydroxylhaltigen Polyestern aus Isophthalsäure, Trimethylolpropan, Hexandiol-1.6, und gegebenenfalls 3-Methylpentandiol, Neopentylglykol, Decandicarbonsäure, Hydroxypivalinsäureneopentylglykolester, mit einer Glasumwandlungstemperatur von 2—16°C, und gegebenenfalls üblichen Zuschlagstoffen, bestehen.

Die Verkappten Isocyanuratgruppenhaltigen Isophorondiisocyanate weiden im folgenden auch als Härter bezeichnet.

Oftwar es vorteilhaft, in den mit ε-Caprolactam verkappten Isocyanat-Addukten einen Gehalt an freien NCO-Gruppen zu belassen, im allgemeinen sollten 0,1 bis 10 Gew.% NCO, vorzugsweise 1 bis 7 Gew.% NCO unverkappt bleiben.

Die Härter-Gemische können nach folgenden Verfahren hergestellt werden:

a) Mischung der blockierten Einzelhärter

Man verkappt zunächst die NCO-Gruppen des Isophorondiisocyanats mit ε-Caprolactam. Außerdem werden die freien NCO-Gruppen des diisocyanatfreien Isocyanuratgruppen enthaltenden Isophorondiisocyanats, das durch partielle Trimerisierung des Diisocyanats und anschließende Abtrennung des nicht umgesetzten Diisocyanats durch Dünnschichtdestillation hergestellt wird, mit ε-Caprolactam verkappt. Anschließend werden die beiden Härter in der Schmelze im gewünschten Mengenverhältnis miteinander gemischt.

b) "In-Situ-Gemische"

Eine besonders vorteilhafte Herstellungvariante des Gemisches der beiden Härter besteht darin, daß man das Diisocyanat mit Hilfe eines Trimerisierungskatalysators bis zu dem jeweils gewünschten Grad trimerisiert, dann den Katalysator desaktiviert und darauf die freien NCO-Gruppen dieses "in-situ-Gemisches" derart mit ε-Caprolactam verkappt, daß 0,1 bis 10 Gew.% NCO unverkappt bleiben.

Bei beiden Herstellungsverfahren kann man die Verwendung und Trimerisierung auch in einem Lösungsmittel durchführen, am günstigsten in dem später verwendeten Lösungsmittel.

Als Katalysatoren für die Trimerisierung haben sich (nach der DE—OS 26 44 684) Mischungen von 1,4-Diazabicyclooctan[2.2.2](DABCO) mit Propylenoxid ausgezeichnet bewährt. Die Desaktivierung des Katalysators läßt sich bequem durch Austreiben bei tiefer Temperatur mit einem inerten Gasstrom (besonders $N_2$) oder durch Absaugen bei erhöhten Temperaturen (Evakuieren) bewerkstelligen.

Die erfindungsgemäß zu verwendenden hydroxylgruppenhaltigen Polyester müssen einen niedrigen Glasumwandlungspunkt haben. En soll zwischen +25°C und —25°C liegen.

Die Polyester werden in an sich bekannter Weise durch Verestern oder Umestern, gegebenenfalls in

2

**0 026 448**

Gegenwart üblicher Katalysatoren, hergestellt, wobei durch geeignete Wahl des COOH/OH-Verhältnisses Endprodukte erhalten werden, deren Hydroxylzahl zwischen 30 und etwa 240, bevorzugt zwischen etwa 60 und 150 liegt.

Geeignete Lösungsmittel für die erfindungsgemäßen Einkomponenten-Einbrenn-Lacke sind solche, deren unterer Siedepunkt bis ca. 80°C liegt. Die obere Grenze des Siedepunkts der geeigneten Lösungsmittel ist von den jeweilige Einbrennbedingungen abhängig. Je höher die Einbrenntemperatur ist, desto höher müssen auch die Siedetemperaturen des zu verwendenden Lösungsmittels liegen. Als Lösungsmittel kommen folgende Verbindungen in Frage:

Aromatische Kohlenwasserstoffe, wie z.B. Toluol, Xylol, Tetralin, Cumol, sowie technische Gemische von Aromaten mit engen Siedeintervallen, z.B. SOLVESSO 150 der Fa. Esso

Ketone, wie z.B. Methylisobutylketon, Diisobutylketon Isophoron und

Ester, wie Essigsäure-n-hexylester, Äthylglykolacetat, Äthylacetat, n-Butylacetat usw.

Die genannten Verbindungen können auch als Gemische eingesetzt werden. Die Konzentration des Harz (Oxyester)/Härter-Gemisches in den erwähnten Lösungsmitteln liegt zwischen 40 und 80 Gew.%, vorzugsweise zwischen 50 und 70 Gew.%.

Die erfindungsgemäßen Einkomponenten-Einbrennlacke können in geeigneten Mischaggregaten, z.B. Rührkesseln, durch einfaches Vermischen der drei Lackkomponenten (Lösungsmittel, Oxyester, verkapptes Polyisocyanat) bei 80—100°C hergestellt werden. Auch übliche Zuschlagsstoffe, wie Pigmente, Verlaufmittel, Glanzverbesserer, Antioxidantien, Entschäumer, Katalysatoren und Hitzestabilisatoren können ebenfalls in einfacher Weise der Lacklösung zugesetzt werden.

Die Aushärtung der erfindungsgemäßen Lacke erfolgt je nach Anwendung in einem Temperaturbereich von 150—350°C vorzugsweise zwischen 160—300°C und in einer Zeit von 45 bis 0,75 Minuten, vorzugsweise von 35 bis 1,5 Minuten. Die ausgehärteten Überzüge weisen hervorragende lacktechnische Eigenschaften auf. Sie finden vor allem Anwendung in der Coil-Coating-Lackierung für außenbewitterungsbeständige Ein- und Zweischicht-Lackierungen.

Beispiele

A. Herstellung des verkappten Isocyanatoisocyanurats

1. 100 Gew.-Teile Isophorondiisocyanat mit einem NCO-Gehalt von 37,8% werden mit 0,5 Gew.-Teilen eines Katalysatorsystems aus 2 Gew.-Teilen Propylenoxid-1,2 und 1 Gew.-Teil 1,4-Diazabicyclooctan[2.2.2] (Dabco) 3 h lang bei 120°C erhitzt. Während dieser Zeit fällt der NCO-Gehalt auf 28,4%. Das entspricht einem etwa 50%-igen Umsatz zu Isocyanurat miteinem freien NCO je Isophoron-Einheit.

Zur Desaktivierung des Katalysators wird das Reaktionsgemisch auf 40°C abgekühlt und bei dieser Temperatur 1/2 h lang mit einem Stickstoffstrom gestrippt. Dabei verändert sich der NCO-Gehalt des Reaktionsgemisches noch geringfügig auf 28,2%.

Zu 100 Gew.-Teilen dieses Isocyanato-isocyanurat-Gemisches werden bei 100°C 76,5 Gew.-Teile ε-Caprolactam portionsweise so zugegeben, daß die Reaktionstemperatur nicht über 120°C ansteigt. Zur Vervollständigung der Reaktion wird das Reaktionsgemisch nocht 2 h bei 120°C gehalten.

2. 100 Gew.-Teile Isophorondiisocyanat werden mit 0,75 Gew.-Teilen des wie im Beispiel 1 zusammengesetzten Katalysatorsystems 2 h lange bei 120°C erhitzt. In dieser Zeit fällt der NCO-Gehalt von 37,8% auf 28,4% (entsprechend einem etwa 50%-igen Umsatz zu Isocyanurat).

Zur Desaktivierung des Katalysators wird bei 120°C 15 Minuten lang evakuiert. Während dieser Zeit verändert sich der NCO-Gehalt des Reaktionsgemisches auf 26,0%.

Zu 100 Gew.-Teilen dieses Isocyanato-isocyanurat-Gemisches werden bei 110°C 69,96 Gew.-Teile ε-Caprolactam portionsweise so zugegeben, daß die Reaktionstemperatur nicht über 120°C ansteigt. Zur Vervollständigung der Reaktion wird das Reaktionsgemisch ebenfalls noch 2 h bei 120°C getempert.

3. 100 Gew.-Teile Isophorondiisocyanat werden mit 0,5 Gew.-Teilen des im Beispiel 1 beschriebenen Katalysators 4,5 h lang bei 120°C erhitzt. Das Fortschreiten der Trimerisierung wird mit Hilfe des Brechungsindexes, der Viskosität oder das NCO-Gehalts verfolgt.

Nachdem der NCO-Gehalt auf 25,8% (entsprechend einem Isocyanuratumsetzungsgrad von ca. 64%) abgesunken war, wurde 1/2 h lang bei 265 Pa evakuiert. Nach Abkühlen hat das Reaktionsgemisch einen NCO-Gehalt von 25%.

Zu 100 Gew.-Teilen dieses Isocyanato-isocyanurat-Gemisches werden bei 120°C 67,3 Gew.-Teile ε-Caprolactam langsam unter gutem Rühren zudosiert.

Nach erfolgter ε-Caprolactamzugabe wird das Reaktionsgemisch noch 1h bei 130°C erhitzt.

In der folgenden Tabelle 1 sind die Versuchsbedingungen noch einmal zusammengestellt, im unteren Teilenhält diese Tabelle die Eigenschaften der so hergestellten verkappten Diisocyanato-isocyanurat-Gemische und von daraus hergestellten 60%igen Lösungen.

3

# 0 026 448

TABELLE 1
Versuchsbedingungen und Eigenschaften der
Isocyanato-isocyanurat-Gemische der Beispiele 1 bis 3.

| Beispiel-Nr. | | H1 | H2 | H3 |
|---|---|---|---|---|
| Katalysator-Menge/100 g IPDI | g | 0,5 | 0,75 | 0,5 |
| Trimerisierungstemperatur | °C | 120 | 120 | 120 |
| Trimerisierungsdauer | h | 3 | 2 | 4,5 |
| Isocyanuratbildung | % | 50 | 50 | 64 |
| Isocyanuratbildung einschließlich Nachbildung | % | 51 | 62 | 68 |
| ε-Caprolactam-Menge/100 g Gemisch | g | 76,5 | 69,95 | 67,3 |
| Verkappungstemperatur | °C | 100 (bis 120) | 110 (bis 120) | 120 |
| Nachreaktion/Dauer | h | 2 | 2 | 2 |
| Nachreaktionstemperatur | °C | 120 | 120 | 120 |
| Freies NCO | % : | <0,2 | <0,2 | <0,3 |
| verkapptes NCO | % : | 16,0 | 15,2 | 14,8 |
| Schmelzintervall | °C : | 73—75 | 85—90 | 97—100 |
| Aufspaltungstemperatur | °C : | ca.170 | ca.170 | ca.170 |
| Glasumwandlungstemp. (DTA) | °C | ca.47 | ca.50 | ca.55 |
| Auslaufzeit einer 60 gew.-%igen Lösung bei 20°C (DIN 4 Becher) nach DIN 53 211 | | | | |
| Lösungsmittelgemisch | A sec. | 23 | 46 | 52 |
| Lösungsmittelgemisch | B sec. | 40 | 61 | 70 |
| Lösungsmittelgemisch | C sec. | 75 | 119 | 143 |

Das Lösungsmittelgemisch A setzt sich zusammen aus 1 Gew.-Teil n-Butylacetat und 3 Gew.-Teilen technischem Xylol, das Lösungsmittelgemisch B aus 1 Gew.-Teil Äthylenglycolacetat (EGA) und 2 Gew.-Teilen technischem Xylol und das Lösungsmittelgemisch C aus 1 Gew.-Teil Äthylenglycolacetat (EGA) und 2 Gew.-Teilen des technischen Aromaten-Gemisches SOLVESSO 150 (der Firma Esso) mit dem Siedeintervall 177 bis 206°C und dem Taupunkt von mindestens 66°C.

B. Herstellung der Polyester

In einem heizbaren Reaktor wurden die in der Tabelle 2 angegebenen Bestandteile unter Durchleiten eines schwachen $N_2$-Stromes in Gegenwart von 0,05 Gew:% Di-n-butyl-zinnoxid als Katalysator solange verestert, bis die Säurezahl unter 2 mg KOH/g lag. Beim Polyester P1, bei dem die Reaktion in einem 4 l Glaskolben durchgeführt wurde, setzte die erste Wasserabspaltung bei etwa 190°C ein. Innerhalb von 6 bis 8 Stunden wurde die Temperatur auf 220°C erhöht. Dann wurde die Veresterung innerhalb weiterer 6 Stunden bei 220°C zu Ende geführt.

Die so hergestellten Polyester wurden dann auf 200°C abgekühlt und durch Evakuieren bei 1300 bis 2700 Pa innerhalb von 30 bis 45 Minuten weitgehend von flüchtigen Anteilen befreit.

Zusammensetzung und physikalische Kenndaten der Polyester sind in der Tabelle 2 zusammengestellt.

4

**0 026 448**

TABELLE 2
Polyester

| Polyester | | P1 | P2 | P3 |
|---|---|---|---|---|
| Rezeptur Isophthalsäure | Mol | 7 | 18 | 17 |
| | g | 1162 | 2988 | 2822 |
| Trimethylolpropan-1,5 | Mol | 2 | 2 | 2 |
| | g | 268 | 268 | 268 |
| Hexandiol-1,6 | Mol | 5 | 14 | 13 |
| | g | 590 | 1652 | 1534 |
| 3-Methylpentandiol | Mol | 1 | — | — |
| | g | 118 | — | — |
| Neopentylglycol | Mol | — | 5 | 5 |
| | g | — | 520 | 520 |
| Decandicarbonsäure-1,10 | Mol | — | — | 1 |
| | g | — | — | 230 |
| Hydroxypivalinsäure neopentylglycolester | Mol | — | — | 1 |
| | g | — | — | 204 |
| Di-n-butylzinnoxid | Gew.% | 0,05 | 0,05 | 0,05 |
| | g | 1,07 | 2,71 | 2,79 |

Physikalische Kenndaten

| | | | | |
|---|---|---|---|---|
| OH-Zahl | mg KOH/g | 100 bis 105 | 80 bis 90 | 80 bis 90 |
| Säurezahl | mg KOH/g | <2 | <2 | <2 |
| Glasumwandlungstemperatur (DTA) | °C | 4—12 | 2—16 | 4—15 |

Auslaufzeit einer
60 gew.-%igen Lösung
bei 20°C (DIN 4 Becher)
nach DIN 53211

| | | | | |
|---|---|---|---|---|
| Lösungsmittelgemisch | A | sec. 300 | 130 | 110 |
| Lösungsmittelgemisch | B | sec. 470 | 197 | 174 |
| Lösungsmittelgemisch | C | sec. 750 | 345 | 275. |

C Polyurethan-Einbrennlacke.

Für die Formulierungen der pigmentierten Lacksysteme wurden sowohl die im Abschnitt A beschriebenen Härter als auch die im Abschnitt B beschriebenen Polyester jeweils in 60%iger Lösung eingesetzt. Für niedrigere Einbrenntemperaturen wurden die Lösungsmischung A, (siehe Seite 11.) für höhere Einbrenntemperaturen die Lösungsmischung C bevorzugt verwendet.

Es wurde jeweils die in Tabelle 3 angeführten Mengen Polyesterlösung mit den ebenfalls genannten Mengen Härterlösung zusammengegeben. Die so hergestellten Lacklösungen verändern sich beim Lagern nicht.

Nach Zusatz von jeweils 300 Gew.-Teilen Weißpigment (=TiO$_2$) und 2 Gew.-Teilen Siliconöl OL als Verlaufmittel wurde diese Mischung in einer Sandmühle abgerieben.

Die so erhaltenen pigmentierten Lacksysteme E1—E8 wurden auf 1 mm dicke Stahl- oder Aluminiumbleche appliziert. Die Schichtdicke der Lackfilme lag zwischen 25 und 30 μ. Die Aushärtung erfolgte in einem Umlauftrockenschrank bei den in den Tabellen 4 a bis h in den Spalten 1 und 2 angegebenen Zeiten und Temperaturen.

5

**0 026 448**

In den Tabellen 4a bis h wurden folgende Abkürzungen benutzt:

HK=Härte n. König (in sec.) (DIN 53 157)
HB=Härte n. Buchholz (DIN 53 153)
ET=Tiefung n. Erichsen (in mm) (DIN 53 156)
Imp. rev.=Impact reverse (m.g) (Kugelschlag nach GARDNER) (ASTM D 2794)

Der T-Bend-Test gibt die Anzahl Bleche gleicher Stärke an, die, in die Knickstelle eingelegt, beim Zusammenpressen des "Knicks" in einem Schraubstock noch keine Risse an der Knickstelle erkennen lassen.

Beim Bleistiftverfahren nach Wolf-Willborn läßt man Bleistifte der 17 Härtegrade von 6 B bis 9 H unter einem Winkel von 45°C und einer Kraft von 7,5 N über die Anstrichfläche "schreiben". Es wird der Härtegrad angegeben, bei dem ein Ritzen der lackierten Fläche zu beobachten ist. (Vergl. Bedienungsanweisung 291 D der Firma Erichsen, 5070 Hemer-Sundwig) Da die Lacke erst bei H-härten Filmverletzungen zeigten-wurde der Buchstaben H nur in der Überschrift der Einzeltabellen vermerkt.

GS=Gitterschnittprüfung (DIN 53 151)
GG 20° und 60°=Messung des Glanzes n. Gardner (ASTM-D 523).

Die Rezepturen sind in der folgenden Tabelle 3 zusammengestellt und die Härtungsbedingungen und die mechanischen Kenndaten der Lackfilme in den Tabellen 4a bis h.

TABELLE 3

Rezepturen der pigmentierten Polyurethan-Einbrennlacke E1 bis E8

| Art der Kombination | | E1 P1/H1 | E2 P1/H2 | E3 P2/H1 | E4 P2/H2 | E5 P2/H3 | E6 P3/H1 | E7 P3/H2 | E8 P3/H3 |
|---|---|---|---|---|---|---|---|---|---|
| Polyesterlösung | Gew.T. | 475,51 | 467,67 | 507,89 | 500,72 | 496,9 | 463,51 | 500,72 | 496,9 |
| Härterlösung | Gew.T. | 222,49 | 230,33 | 190,11 | 197,28 | 201,1 | 234,49 | 197,28 | 201,1 |
| Weißpigment (TiO$_2$) | Gew.T. | 300,00 | 300,00 | 300,00 | 300,00 | 300,00 | 300,00 | 300,00 | 300,00 |
| Verlaufmittel, (Siliconöl OL) | Gew.T. | 2,00 | 2,00 | 2,00 | 2,00 | 2,00 | 2,00 | 2,00 | 2,00 |
| Eigenschaften s. Tabelle 4 | | a | b | c | d | e | f | g | h |

TABELLE 4

Härtungs-Bedingungen und mechanische Eigenschaften der Lackfilme.

4a) Einbrennlack E1 (P1/H1)

| Härtungs-bedingungen | Mechanische Kenndaten | | | | | | | | |
|---|---|---|---|---|---|---|---|---|---|
| Zeit/Temp. Min°C | HK sec. | HB - | ET mm | Imp. rev. m.g | T-Bend-test | Bleistift-härte H | GS | GG 20° | GG 60° |
| 20/170 | 177 | 100 | >10 | >944,64 | 1—2 | 2 | 0 | 79 | 88 |
| 15/180 | 175 | 111 | >10 | >944,64 | 1 | 1—2 | 0 | 80 | 87 |
| 7/200 | 176 | 100 | >10 | >944,64 | 2 | 2 | 0 | 80 | 85 |
| 10/200 | 181 | 100 | >10 | >944,64 | 1 | 1—2 | 0 | 76 | 86 |
| 1,5/300 | 170 | 111 | >10 | >944,64 | 1—2 | 2 | 0 | 77 | 86 |

6

# 0 026 448

4b) Einbrennlack E2 (P1/H2)

| Härtungs-bedingungen | Mechanische Kenndaten | | | | | | | | |
|---|---|---|---|---|---|---|---|---|---|
| Zeit/temp. min°C | HK sec. | HB - | ET mm | Imp. rev. m.g | T-Bend-test | Bleistift-härte H | GS | GG 20° | GG 60° |
| 20/170 | 175 | 100 | >10 | >944,64 | 1 | 2 | 0 | 78 | 88 |
| 15/180 | 176 | 101 | >10 | >944,64 | 2 | 2—3 | 0 | 80 | 89 |
| 7/200 | 180 | 100 | >10 | >944,64 | 1—2 | 2—3 | 0 | 79 | 89 |
| 10/200 | 179 | 111 | >10 | >944,64 | 2 | 3 | 0 | 78 | 90 |
| 1,5/300 | 182 | 111 | >10 | >944,64 | 2 | 2 | 0 | 78 | 88 |

4c) Einbrennlack E3 (P2/H1)

| Härtungs-bedingungen | Mechanische Kenndaten | | | | | | | | |
|---|---|---|---|---|---|---|---|---|---|
| Zeit/temp. min°C | HK sec | HB - | ET mm | Imp. rev. m.g | T-Bend-test | Bleistift-härte H | GS | GG 20° | GG 60° |
| 35/160 | 164 | 100 | >10 | >944,64 | 1—2 | 1 | 0 | 79 | 88 |
| 20/170 | 172 | 100 | >10 | >944,64 | 0 | 1—2 | 0 | 72 | 89 |
| 15/180 | 170 | 100 | >10 | >944,64 | 0 | 2 | 0 | 70 | 84 |
| 7/20 | 172 | 100 | >10 | >944,64 | 0 | 2 | 0 | 74 | 86 |
| 10/200 | 171 | 111 | >10 | >944,64 | 0 | 2 | 0 | 72 | 87 |
| 1,5/300 | 162 | 100 | >10 | >944,64 | 0 | 1—2 | 0 | 70 | 87 |

4d) Einbrennlack E4 (P2/H2)

| Härtungs-bedingungen | Mechanische Kenndaten | | | | | | | | |
|---|---|---|---|---|---|---|---|---|---|
| Zeit/temp. min°C | HK sec. | HB - | ET mm | Imp. rev. m.g | T-Bend-test | Bleistift-härte H | GS | GG 20° | GG 60° |
| 35/160 | 170 | 100 | >10 | >944,64 | 0 | 1—2 | 0 | 74 | 86 |
| 20/170 | 175 | 111 | >10 | >944,64 | 0—1 | 2 | 0 | 75 | 89 |
| 12/180 | 172 | 100 | >10 | >944,64 | 0 | 2—3 | 0 | 72 | 88 |
| 7/200 | 175 | 111 | >10 | >944,64 | 0 | 2 | 0 | 74 | 89 |
| 10/200 | 174 | 111 | >10 | >944,64 | 0 | 2—3 | 0 | 75 | 90 |
| 1,5/300 | 164 | 100 | >10 | >944,64 | 0 | 2 | 0 | 72 | 86 |

7

## 0 026 448

4e) Einbrennlack E5 (P2/H3)

| Härtungs-bedingungen | Mechanische Kenndaten | | | | | | | | |
|---|---|---|---|---|---|---|---|---|---|
| Zeit/temp. min°C | HK sec. | HB - | ET mm | Imp. rev. m.g | T-Bend-test | Bleistift-härte H | GS | GG 20° | GG 60° |
| 35/160 | 178 | 100 | >10 | >944,64 | 0—1 | 2 | 0 | 79 | 89 |
| 20/170 | 180 | 111 | >10 | >944,64 | 0 | 2 | 0 | 80 | 90 |
| 15/180 | 182 | 100 | >10 | >944,64 | 0 | 2 | 0 | 78 | 89 |
| 7/200 | 179 | 100 | >10 | >944,64 | 0 | 2 | 0 | 76 | 88 |
| 10/200 | 178 | 111 | >10 | >944,64 | 0 | 2—3 | 0 | 78 | 90 |
| 1,33/300 | 168 | 100 | >10 | >944,64 | 0—1 | 2 | 0 | 77 | 89 |

4f) Einbrennlack E8 (P3/H1)

| Härtungs-bedingungen | Mechanische Kenndaten | | | | | | | | |
|---|---|---|---|---|---|---|---|---|---|
| Zeit/temp. min°C | HK sec. | HB - | et mm | Imp-rev. m.g. | T-Bend-test | Bleistift-härte H | GS | GG 20° | GG 60° |
| 20/170 | 184 | 111 | >10 | >944,64 | 1—2 | 2—3 | 0 | 77 | 86 |
| 15/180 | 180 | 111 | >10 | >944,64 | 2 | 3 | 0 | 75 | 87 |
| 7/200 | 177 | 100 | >10 | >944,64 | 2 | 2—3 | 0 | 77 | 86 |
| 10/200 | 183 | 100 | >10 | >944,64 | 1—2 | 3 | 0 | 74 | 85 |
| 1,50/300 | 172 | 100 | >10 | >944,64 | 1—2 | 2 | 0 | 76 | 84 |

4g) Einbrennlack E6 (P3/H2)

| Härtungs-bedingungen | Mechanische Kenndaten | | | | | | | | |
|---|---|---|---|---|---|---|---|---|---|
| Zeit/temp. min°C | HK sec. | HB - | ET mm | Imp. rev. m.g | T-Bend-test | Bleistift-härte H | GS | GG 20° | GG 60° |
| 35/160 | 162 | 100 | >10 | >944,64 | 0 | 2 | 0 | 72 | 84 |
| 20/170 | 163 | 100 | >10 | >944,64 | 0 | 2 | 0 | 72 | 85 |
| 15/180 | 164 | 111 | >10 | >944,64 | 0 | 2 | 0 | 72 | 86 |
| 7/200 | 164 | 100 | >10 | >944,64 | 0 | 2 | 0 | 71 | 87 |
| 10/200 | 167 | 111 | >10 | >944,64 | 0 | 2—3 | 0 | 70 | 86 |
| 1,50/300 | 160 | 111 | >10 | >944,64 | 0 | 2 | 0 | 70 | 87 |

8

# 0 026 448

4h) Einbrennlack E7 (P3/H3)

| Härtungs-bedingungen | Mechanische Kenndaten | | | | | | | | |
|---|---|---|---|---|---|---|---|---|---|
| Zeit/temp. min°C | HK sec. | HB - | ET mm | Imp. rev. m.g | T-Bend-test | Bleistift-härte H | GS | GG 20° | GG 60° |
| 36/160 | 168 | 100 | >10 | >944,64 | 0—1 | 2 | 0 | 75 | 87 |
| 20/170 | 170 | 100 | >10 | >944,64 | 0—1 | 2 | 0 | 79 | 90 |
| 15/180 | 169 | 100 | >10 | >944,64 | 0 | 2—3 | 0 | 76 | 87 |
| 7/180 | 169 | 100 | >10 | >944,64 | 0—1 | 2 | 0 | 76 | 89 |
| 10/200 | 171 | 111 | >10 | >944,64 | 0 | 2—3 | 0 | 77 | 88 |
| 1,50/300 | 166 | 100 | >10 | >944,64 | 1 | 2 | 0 | 78 | 87 |

## Patentanspruch

Einkomponenten-Einbrennlacke auf der Basis von Polyoxyverbindungen und mit ε-Caprolactam ganz oder teilweise verkappten cycloaliphatischen Polyisocyanaten in inerten Lösungsmitteln, dadurch gekennzeichnet daß sie aus mit ε-Caprolactam verkapptem, teilweise isocyanuratgruppenhaltigem Isophorondiisocyanat mit einem Isocyanuratgehalt von 50—68% und hydroxylhaltigen Polyestern aus Isophthalsäure, Trimethylolpropan, Hexandiol-1.6, und gegebenenfalls 3-Methylpentandiol, Neopentylglykol, Decandicarbonsäure, Hydroxypivalinsäureneopentylglykolester, mit einer Glasumwandlungstemperatur von 2—16°C, und gegebenenfalls üblichen Zuschlagstoffen, bestehen.

## Revendication

Vernis à cuire à un seul composant à base de composés polyoxy et de polyisocyanates cyclo-aliphatiques, bloqués totalement ou partiellement avec du ε-caprolactame, dans un solvant inerte, vernis caractérisés en ce qu'ils sont constitués de diisocyanate d'isophoron bloqué partiellement par du ε-caprolactame, contenant des groupes isocyanurates avec une teneur en isocyanurate de 50 à 68%, et constitués également de polyesters des acide isophtalique, triméthylolpropane, hexanediol-6, et éventuellement 1-méthylpentanediol, néopentylglycol, acide décanedicarboxylique, néopentylglucolester de l'acide hydroxypivalique, avec une température de vitrification de 2 à 16°C, et éventuellement les additifs courants.

## Claim

Single-component stoving enamels based on polyhydroxy compounds and cycloaliphatic polyisocyanates, which are wholly or partially masked with ε-caprolactam, in inert solvents, characterised in that they consist of isophorone diisocyanate, which is masked with ε-caprolactam and partially contains isocyanurate groups and has an isocyanurate content of 50—68%, and of hydroxyl-containing polyesters of isophthalic acid, trimethylolpropane, hexane-1,6-diol and, if appropriate, 3-methylpentanediol, neopentyl glycol, decanedicarboxylic acid and neopentyl glycol hydroxypivalate, having a glass transition temperature of 2—16°C, and, if appropriate, conventional additives.

9